# FASCICULE DE BREVET EUROPEEN

(11) **EP 1 136 355 B1**
(45) Date de publication et mention de la délivrance du brevet: **31.05.2006**
(21) Numéro de dépôt: 01400711.6
(22) Date de dépôt: 19.03.2001
(51) Int. Cl.: B64D 27/26

(54) **Dispositif de reprise de poussée apte à relier un turbomoteur et un mât d'aéronef**
Schubbefestigung eines Triebwerkes an einem Luftfahrzeug
Aircraft engine thrust mount

(30) Priorité: 22.03.2000 FR 0003636
(43) Date de publication de la demande: 26.09.2001
(73) Titulaire: AIRBUS France, 31060 Toulouse (FR)
(72) Inventeur: Jule, Pascal, 31170 Tournefeuille (FR); Levert, Stéphane, 31200 Toulouse (FR)
(74) Mandataire: Poulin, Gérard

(56) Documents cités:
- EP-A- 0 564 126
- EP-A- 0 805 108
- EP-A- 0 879 759
- EP-A- 1 103 463

## Description

### Domaine technique

L'invention concerne un dispositif de reprise de poussée, conçu pour relier un turbomoteur et un mât d'un aéronef, de façon à assurer la transmission à la structure de l'aéronef des efforts de poussée exercés par le turbomoteur.

Dans l'ensemble du texte, les termes "avant" et "arrière" se réfèrent au sens d'écoulement de l'air dans le turbomoteur, de l'avant vers l'arrière.

### Etat de la technique

Les turbomoteurs assurant la propulsion des avions sont habituellement montés sous la voilure ou à l'intérieur de l'empennage de la queue, par l'intermédiaire d'un mât. La liaison entre le moteur et le mât est assurée par deux ou trois dispositifs d'accrochage conçus pour transmettre à la structure de l'aéronef, au travers du mât, les efforts exercés par le moteur. Ces efforts comportent des charges verticales telles que le poids du moteur, des charges axiales résultant de la poussée produite par le moteur, des charges latérales dues notamment aux turbulences provoquées par le vent, et des charges ou couples de roulis résultant de la rotation du moteur. Les dispositifs d'accrochage doivent également absorber les modifications dimensionnelles dues aux dilatations et contractions thermiques axiales et radiales du moteur par rapport au mât.

L'un au moins des dispositifs d'accrochage du turbomoteur est généralement dédié, au moins en partie, à la transmission des efforts de poussée. Ce dispositif, habituellement situé à l'arrière du moteur, comprend le plus souvent une ferrure fixée au mât, un palonnier articulé sur la ferrure dans sa partie centrale, ainsi que deux bielles reliant les extrémités du palonnier à un élément de structure du turbomoteur, décalé vers l'avant par rapport à la ferrure. Les deux bielles présentent une orientation voisine de la direction de poussée du turbomoteur.

Afin d'assurer la transmission des efforts de poussée même en cas de rupture d'une pièce, les dispositifs d'accrochage remplissant cette fonction comprennent habituellement une structuré d'accrochage principale et une structure d'accrochage de secours. La structure d'accrochage principale assure la transmission des efforts dans les conditions normales de fonctionnement, c'est-à-dire lorsque toutes les pièces du dispositif d'accrochage sont intactes. La structure d'accrochage de secours est alors inactive. En revanche, la structure d'accrochage de secours assure la transmission des efforts entre le moteur et l'avion en cas de défaillance de l'une des pièces de la structure d'accrochage principale.

Le document EP-A-0 564 126, qui montre toutes les caractéristiques du préambule de la revendication 1, décrit un dispositif de reprise de poussée comprenant une structure d'accrochage principale et une structure d'accrochage de secours. De manière classique, la structure d'accrochage principale comprend une ferrure fixée sur le mât et deux bielles de transmission d'efforts reliées à la ferrure par un palonnier. La structure d'accrochage de secours comprend deux chapes latérales femelles formées sur la ferrure, dans lesquelles sont reçus avec jeu des prolongements des axes de pivotement par lesquels les bielles sont articulées sur les extrémités du palonnier.

Ce dispositif de reprise de poussée est généralement satisfaisant. Il a toutefois pour inconvénient de faire transiter les efforts de poussée par les mêmes axes de pivotement dans les conditions normales de fonctionnement et en cas de rupture de l'une des pièces.

Le document EP-A-0 805 108 décrit également un dispositif de reprise de poussée comportant une structure d'accrochage principale et une structure d'accrochage de secours. La structure d'accrochage principale est du même type que celle qui est utilisée dans le document EP-A-0 564 126. La structure d'accrochage de secours comprend un axe de pivotement supplémentaire interposé entre la ferrure et le palonnier et traversant ce dernier avec un jeu prédéterminé.

Ce dispositif de reprise de poussée a principalement pour inconvénient de devenir inopérant lors d'une cassure du palonnier. Dans ces conditions, le dispositif n'assure plus la reprise des efforts de poussée et il existe un fort risque de perte du moteur.

Le document EP-A-0 879 759 décrit également un dispositif de reprise de poussée comportant une structure d'accrochage principale et une structure d'accrochage de secours. La structure d'accrochage principale est du même type que celle qui est utilisée dans les précédents documents. La structure d'accrochage de secours comprend des ergots formés sur les extrémités des bielles articulées sur le palonnier. Ces ergots sont reçus avec jeu dans des fentes longitudinales formées dans des oreilles solidaires de la ferrure.

Ce dispositif nécessite d'être dimensionné afin de pouvoir transmettre correctement les efforts. Il en découle une augmentation de masse par rapport au dispositif de reprise de poussée décrit dans le document précédent.

Le document EP-A-1 103 463, qui constitue un document selon l'Article 54(3) CBE, décrit un dispositif de reprise de poussée apte à relier un turbomoteur et un mât d'aéronef. Ce dispositif comprend des moyens de montage principal et des moyens de montage de secours. Les moyens de montage principal comprennent une ferrure principale, un palonnier articulé en son centre sur une chape centrale de la ferrure principale et deux bielles reliant les extrémités du palonnier au turbomoteur sensiblement selon la direction de poussée de ce dernier. Les moyens de montage de secours comprennent une ferrure de secours montée entre le mât et la ferrure principale, une articulation avec jeu prévue entre la ferrure principale et chacune des deux bielles et deux biellettes de secours relient la ferrure de secours au turbomoteur par des articulations avec jeu. Les moyens de montage de secours ne reprennent les efforts qu'en cas de défaillance des moyens de montage principal.

### Exposé de l'invention

L'invention a pour objet un dispositif de reprise de poussée conçu pour assurer la liaison entre un turbomoteur et un mât d'un aéronef, ce dispositif étant agencé de façon telle qu'il présente une masse et un encombrement réduits et qu'il assure la transmission des efforts de poussée même en cas de rupture de l'une quelconque des pièces qui le constituent.

Conformément à l'invention ce résultat est obtenu au moyen d'un dispositif de reprise de poussée conforme à la revendication 1.

Dans ce dispositif, la structure d'accrochage de secours comprend des axes de pivotement distincts de ceux qui sont utilisés par la structure d'accrochage principale. De plus, la reprise des efforts de poussée est assurée même dans l'hypothèse d'une rupture du palonnier, quelle que soit la zone dans laquelle se produit cette rupture.

Selon un mode de réalisation préféré de l'invention, les deuxième et troisième axes de pivotement coupent l'axe longitudinal de la bielle correspondante.

De préférence, les chapes latérales de la ferrure sont des chapes mâles et les chapes arrière des bielles des chapes femelles.

Avantageusement, les extrémités latérales du palonnier pénètrent alors dans les chapes femelles des bielles, à l'avant des chapes latérales de la ferrure.

De préférence, les premier, deuxièmes et troisièmes axes de pivotement sont parallèles entre eux.

Dans le mode de réalisation préféré de l'invention, la chape centrale de la ferrure est également une chape femelle dans laquelle est reçue la partie centrale du palonnier.

### Brève description des dessins

On décrira à présent, à titre d'exemple non limitatif, un mode de réalisation préféré de l'invention, en se référant aux dessins annexés, dans lesquels :
- la figure 1 est une vue en perspective représentant schématiquement l'accrochage d'un turbomoteur d'aéronef à un mât, au moyen de deux dispositifs d'accrochage comprenant un dispositif de reprise de poussée conforme à l'invention ;
- la figure 2 est une vue en perspective représentant à plus grande échelle, de l'arrière vers l'avant, la partie principale du dispositif de reprise de poussée selon l'invention ; et
- la figure 3 est une vue en coupe longitudinale représentant la liaison entre l'extrémité de l'une des bielles du dispositif, le palonnier et la ferrure.

### Description détaillée d'un mode de réalisation préféré de l'invention

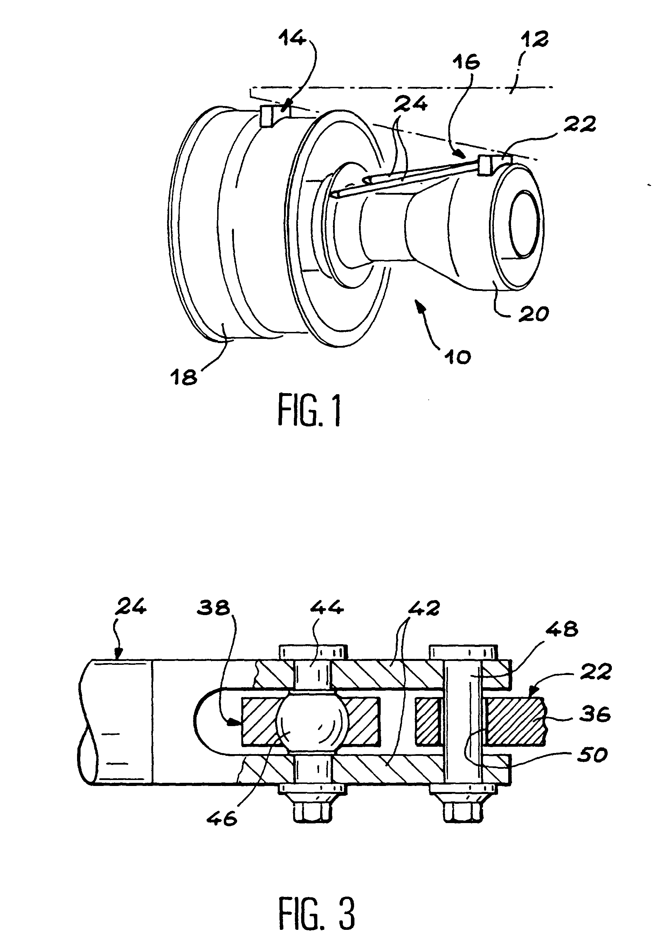

Comme l'illustre très schématiquement la figure 1, selon un montage classique généralement appelé "montage fan hybride", la liaison entre un turbomoteur 10 et un mât 12 équipant un aéronef peut notamment être assurée par un dispositif de liaison avant 14 et un dispositif de liaison arrière 16. Pour faciliter la compréhension, seul le carter de soufflante 18 de la nacelle est représenté et le mât 12 n'est illustré qu'en trait mixte.

Le dispositif de liaison avant 14 est interposé entre le mât 12 et le carter de soufflante 18 du turbomoteur 10. Ce dispositif 14, bien connu de l'homme du métier peut être réalisé de manière quelconque, sans sortir du cadre de l'invention. Il n'en sera donc pas fait de description détaillée.

Le dispositif de liaison arrière 16 constitue un dispositif de reprise de poussée conforme à l'invention. Il est conçu notamment pour transmettre au mât 12 les efforts de poussée exercés par le turbomoteur 10. Ce dispositif 16 est interposé entre le mât 12 et le carter central 20 du turbomoteur 10. Ce dispositif 16 comprend notamment une ferrure 22, fixée au mât 12 au niveau de la partie arrière du carter central 20, et deux bielles 24 reliant la ferrure 22 à la partie avant du carter central 20. Les bielles 24 s'étendent ainsi selon une direction sensiblement parallèle à la direction de poussée du turbomoteur, orientée selon l'axe longitudinal du turbomoteur 10.

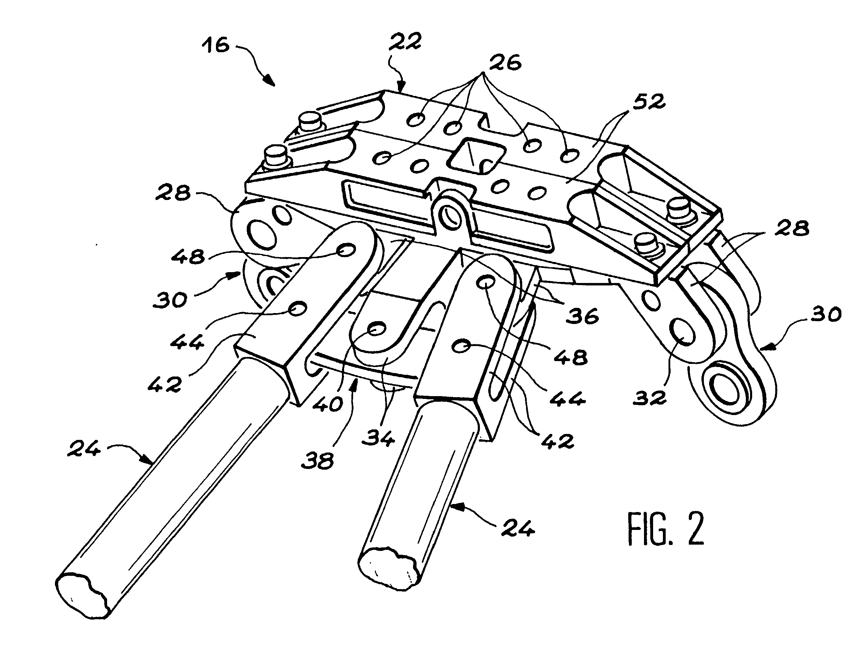

Le dispositif de reprise de poussée 16 conforme à l'invention va à présent être décrit en détail en se référant aux figures 2 et 3.

La ferrure 22 est prévue pour être fixée au mât 12 à l'aide de moyens de fixation classiques, bien connus de l'homme du métier. Ces moyens de fixation comportent notamment une pluralité de boulons (non représentés) qui traversent librement un certain nombre de trous 26 formés dans la ferrure 22.

La ferrure 22 s'étend selon une direction transversale, orthogonale à l'axe longitudinal du turbomoteur 10. A chacune de ses extrémités latérales, la ferrure 22 comporte une chape femelle 28. Une extrémité d'une biellette 30 est reçue dans chacune des chapes femelles 28 et articulée sur celle-ci par un axe de pivotement 32 orienté sensiblement parallèlement à l'axe longitudinal du turbomoteur 10. L'extrémité opposée de chacune des biellettes 30 est reçue dans une chape femelle (non représentée) formée sur le carter central 20 du turbomoteur et reliée à ladite chape par un axe de pivotement (non représenté) parallèle à l'axe de pivotement 32. Des rotules (non représentées) sont avantageusement interposées entre les axes de pivotement et les biellettes 30 afin d'autoriser des mouvements relatifs entre la ferrure 22 et le turbomoteur 10 selon des directions autres que circonférentielles.

L'agencement qui vient d'être décrit permet, de façon classique, de transmettre au mât 12 les efforts et les couples de roulis résultant de la rotation du moteur autour des dispositifs d'accrochage 14 et 16.

Comme le montre la figure 2, la ferrure 22 présente, sur sa face avant tournée vers le carter de soufflante 18, une chape centrale femelle 34 et deux chapes latérales mâles 36. Pour une raison qui apparaîtra mieux par la suite, la chape centrale 34 fait saillie sur une distance plus grande que les chapes latérales 36.

Le dispositif de reprise de poussée comprend également un palonnier 38 dont une partie centrale est articulée sur la chape centrale 34 de la ferrure 22 par un axe de pivotement 40. Plus précisément, la partie centrale du palonnier 38 est reçue dans la chape femelle 34 et traversée avec celle-ci par l'axe de pivotement 40. Cet axe de pivotement 40 relie le palonnier 38 à la ferrure 22 par une liaison articulée sans jeu. L'axe de pivotement 40 est orienté selon une direction sensiblement radiale par rapport à l'axe longitudinal du turbomoteur 10.

Comme l'illustre schématiquement la figure 1, l'extrémité avant de chacune des bielles 24 est articulée sur une partie avant du carter central 20 du moteur 10, par exemple au niveau de l'extrémité arrière du carter de soufflante 18.

L'extrémité arrière de chacune des bielles 24 forme une chape femelle 42 (figure 2 et 3), par laquelle ladite bielle est articulée sur l'extrémité correspondante du palonnier 38. Plus précisément, les extrémités du palonnier 38 sont reçues dans le fond des chapes 42 et traversées avec celles-ci par des axes de pivotement 44. Ces axes de pivotement 44 sont orientés parallèlement à l'axe 40.

Les liaisons formées entre le palonnier 38 et chacune des chapes 44 sont des liaisons articulées sans jeu. Dans les conditions normales de fonctionnement, ces liaisons sans jeu assurent la transmission au mât 12 des efforts de poussée exercés par le moteur, au travers des bielles 24, du palonnier 38 et de la ferrure 22.

Comme l'illustre notamment la figure 3, chacun des axes de pivotement 44 est avantageusement monté dans le palonnier 38 par l'intermédiaire d'une rotule 46. Un montage analogue est avantageusement prévu entre l'axe de pivotement 40 et le palonnier 38. Cet agencement permet d'éviter que des efforts autres que les efforts de poussée soient transmis au travers des bielles 24.

Conformément à l'invention, chacune des chapes latérales 36 de la ferrure 22 est reçue dans un prolongement vers l'arrière de la chape 42 formée sur la bielle 24 correspondante. De plus, un axe de pivotement 48 traverse chacun des ensembles formés par une chape latérale 36 et une chape arrière 42, de façon à définir une liaison avec jeu entre la ferrure 22 et chacune des bielles 24.

Les axes de pivotement 44 et 48 sont sensiblement parallèles à l'axe de pivotement 40 du palonnier 38 sur la ferrure 22, au débattement des rotules près.

Comme le montre plus en détail la figure 3, chacun des axes de pivotement 48 est fixé à la chape d'extrémité 42 de la bielle 24 correspondante et traverse avec un jeu prédéterminé un trou 50 formé dans la chape latérale 36 de la ferrure 22. Le jeu ainsi formé entre l'axe de pivotement 48 et le trou 50 est déterminé en tenant compte des différents débattements possibles entre ces pièces telles que les dilatations différentielles et les mouvements du moteur par rapport aux dispositifs de liaison 14 et 16, afin qu'aucun effort ne soit transmis par l'axe de pivotement 48 dans des conditions normales de fonctionnement du dispositif.

En d'autres termes, lorsqu'aucune des pièces du dispositif n'est endommagée, le palonnier 38 équilibre les efforts de poussée transmis au mât par l'intermédiaire des deux bielles 24, de l'axe de pivotement 40 et de la ferrure 22. Les jeux existants entre les axes de pivotement 48 et les trous 50 sont alors tels qu'aucun effort n'est transmis par ces axes de pivotement 48.

Dans l'hypothèse d'une rupture du palonnier 38, de l'axe de pivotement 40 ou de la chape centrale 34, les efforts dus à la poussée du moteur sont repris par l'une ou l'autre des deux bielles 24 au travers des axes de pivotement 48 et des chapes 36. En effet, le jeu qui existe initialement entre ces pièces s'annule en fonction du sens de la poussée, de sorte que ces liaisons sont rendues travaillantes.

Dans l'hypothèse de la défaillance d'une bielle 24 ou de la chape 42 de l'une d'entre elles, les efforts dus à la poussée sont transmis directement et intégralement au mât 12 par l'autre bielle 24, au travers de l'axe de pivotement 48 et de la chape 42, de la même manière que décrit précédemment. Le palonnier 38 n'étant plus équilibré, il se déplace et ne participe plus à la transmission des efforts de poussée.

Enfin, dans l'hypothèse de la défaillance de l'un des axes de pivotement 44 reliant les bielles 24 au palonnier 38, les efforts dus à la poussée passant par l'axe de pivotement 48 et la chape 36 de la même manière que décrit précédemment.

Il est à noter que les axes de pivotement 44 et 48. de chacune des bielles 24 coupent l'axe longitudinal de celles-ci. Par conséquent, les efforts de poussée utilisent un chemin identique en fonctionnement normal et en fonctionnement de secours. Aucun effort parasite n'est donc créé dans le dispositif lorsque l'une des pièces qui le constitue est défaillante.

Selon un agencement classique, également illustré sur la figure 2, la ferrure 22 est formée d au moins deux pièces distinctes 52 (figure 2) boulonnées l'une à l'autre. Chacune de ces pièces est apte à transmettre au mât 12 les efforts appliqués à la ferrure 22, en cas de rupture de l'autre pièce.

En résumé, le dispositif de reprise de poussée conforme à l'invention permet d'assurer la transmission des efforts de poussée du moteur à la structure de l'avion dans toutes les hypothèses de rupture d'une pièce quelconque de ce dispositif. Une liaison active entre le moteur et l'aéronef est ainsi préservée en toute circonstance.

Il est à noter par ailleurs que ce résultat est obtenu au moyen d'un dispositif dont la masse et l'encombrement restent limités.

Bien entendu, l'invention n'est pas limitée au mode de réalisation qui vient d'être décrit à titre d'exemple. Ainsi, on comprendra aisément que les chapes mâles et femelles peuvent être inversées, sans sortir du cadre de l'invention. De même, au lieu d'être fixés aux chapes 42 et de traverser avec jeu les chapes 36, les axes de pivotement 48 peuvent être fixés aux chapes 36 et traverser avec jeu les chapes 42. Enfin, le terme "chape" doit être pris dans son sens le plus large et couvre,notamment, pour les chapes latérales 36, le cas où les extrémités des chapes 42 pénètrent dans des évidements prévus dans la ferrure 22 et sont articulés directement dans celle-ci.

## Revendications

1. Dispositif de reprise de poussée, apte à relier un turbomoteur (10) et un mât (12) d'un aéronef, le dispositif comprenant :
- une ferrure (22) apte à être fixée au mât (12), ladite ferrure comprenant une chape centrale (34) et deux chapes latérales (36) ;
- la ferrure (22) comprend également deux chapes d'extrémités latérales (28), le dispositif comprenant de plus deux biellettes (30) dont une première extrémité est articulée sur l'une des chapes d'extrémité latérale (28) et dont une deuxième extrémité est apte à être articulée sur le turbomoteur, pour la transmission au mât (12) des efforts et des couples de roulis du moteur (10),
- un palonnier (38) contenant une partie centrale articulée sur la chape centrale (34) de la ferrure (22) par un premier axe de pivotement (40) ; et
- deux bielles (24) orientées sensiblement selon une direction de poussée du turbomoteur et comprenant chacune une extrémité avant apte à être articulée sur le turbomoteur et une chape arrière (42), articulée par un deuxième axe de pivotement (44) sur une extrémité latérale correspondante du palonnier (38),
ledit dispositif étant **caractérisé en ce que** la chape arrière (42) de chacune des bielles (24) est également articulée sur l'une des chapes latérales (36) de la ferrure (22), par une liaison avec jeu comportant un troisième axe de pivotement (48).

2. Dispositif selon la revendication 1, dans lequel chacune des bielles (24) présente un axe longitudinal et le deuxième et le troisième axes de pivotement (44,48) coupent ledit axe longitudinal.

3. Dispositif selon l'une quelconque des revendications 1 et 2, dans lequel les chapes latérales (36) de la ferrure (22) sont des chapes mâles et les chapes arrière (42) des bielles (24) des chapes femelles.

4. Dispositif selon la revendication 3, dans lequel les extrémités latérales du palonnier (38) pénètrent dans les chapes femelles (42) des bielles (24), à l'avant des chapes latérales (36) de la ferrure (22).

5. Dispositif selon l'une quelconque des revendications précédentes, dans lequel les premier (40), deuxièmes (44) et troisièmes (48) axes de pivotement sont parallèles entre eux.

6. Dispositif selon l'une quelconque des revendications précédentes, dans lequel la chape centrale (34) de la ferrure (22) est une chape femelle, dans laquelle est reçue la partie centrale du palonnier (38).

## Claims

1. Thrust recovery device, capable of linking a turboshaft engine (10) and an engine strut (12) of an aircraft, the device comprising:
- an attachment fitting (22) able to be fixed to the engine strut (12), said attachment fitting comprising a central yoke (34) and two lateral yokes (36);
- the attachment fitting (22) also comprises two lateral end yokes (28), the device also incorporating two rods (30), whereof a first end is articulated to one of the lateral end yokes (28) and whereof a second end can be articulated to the turboshaft engine for the transmission to the engine strut (12) of forces and roll torque of the engine (10);
- a control bar (38) containing a central part articulated on the central yoke (34) of the attachment fitting (22) by a first pivot pin (40); and
- two coupling rods (24) oriented almost along the direction of the turboshaft engine thrust and each comprising a front end able to be articulated on the turboshaft engine and a rear yoke (42), articulated by a second pivot pin (44) on a lateral extremity corresponding to the control bar (38) :
said device being **characterized in that** the rear yoke (42) of each of the coupling rods (24) is also articulated on one of the lateral yokes (36) of the attachment fitting (22), by a linkage with play comprising a third pivot pin (48).

2. Device according to claim 1, in which each of the coupling rods (24) has a longitudinal axis and the second and third pivot pins (44, 48) intersect said longitudinal axis.

3. Device according to one or the other of claims 1 and 2, in which the lateral yokes (36) of the attachment fitting (22) are male yokes and the rear yokes (42) of the attachment fittings (24) are female yokes.

4. Device according to claim 3, in which the lateral ends of the control bar (38) enter into the female yokes (42) of the coupling rods (24), in front of the lateral yokes (36) of the attachment fitting (22).

5. Device according to any one of the preceding claims, in which the first (40), second (44) and third (48) pivot pins are parallel to each other.

6. Device according to any one of the preceding claims, in which the central yoke (34) of the attachment fitting (22) is a female yoke, which receives the central part of the control bar (38).

## Patentansprüche

1. Schubaufnahmevorrichtung, die einen Turbomotor (10) und eine Strebe (12) eines Luftfahrzeugs verbinden kann, wobei die Vorrichtung umfasst:
- einen Beschlag (22), der an der Strebe (12) befestigt werden kann, wobei der Beschlag einen mittleren Gabelblock (34) und zwei seitliche Gabelblökke (36) aufweist;
- wobei der Beschlag (22) außerdem zwei seitliche Endgabelblöcke (28) aufweist, wobei die Vorrichtung darüber hinaus zwei Schwingarme (30) aufweist, wovon ein erstes Ende an einem der seitlichen Endgabelblöcke (28) angelenkt ist und ein zweites Ende am Turbomotor angelenkt sein kann, um Kräfte und Rollmomente des Motors (10) an die Strebe (12) zu übertragen,
- einen Schwinghebel (38), der einen mittleren Teil aufweist, der über eine erste Schwenkwelle (40) an dem mittleren Gabelblock (34) des Beschlags (22) angelenkt ist; und
- zwei Schubstangen (24), die im Wesentlichen in einer Schubrichtung des Turbomotors orientiert sind und jeweils ein vorderes Ende, das an dem Turbomotor angelenkt sein kann, und einen hinteren Gabelblock (42), der über eine zweite Schwenkachse (44) an einem entsprechenden seitlichen Ende des Schwinghebels (38) angelenkt ist, besitzen,
wobei die Vorrichtung **dadurch gekennzeichnet ist, dass** der hintere Gabelblock (42) jeder Schubstange (24) über eine Verbindung mit Spiel, die eine dritte Schwenkachse (48) enthält, auch an einem der seitlichen Gabelblöcke (36) des Beschlags (22) angelenkt ist.

2. Vorrichtung nach Anspruch 1, bei der jede der Schubstangen (24) eine Längsachse aufweist und die zweite und die dritte Schwenkachse (44, 48) die Längsachse schneiden.

3. Vorrichtung nach einem der Ansprüche 1 und 2, in der die seitlichen Gabelblöcke (36) des Beschlags (22) Steckgabelblöcke sind und die hinteren Gabelblöcke (42) der Schubstangen (24) Buchsengabelblöcke sind.

4. Vorrichtung nach Anspruch 3, bei der die seitlichen Enden des Schwinghebels (38) vor den seitlichen Gabelblöcken (36) des Beschlags (22) in die Buchsengabelblöcke (42) der Schubstangen (24) eindringen.

5. Vorrichtung nach einem der vorhergehenden Ansprüche, bei der die erste Schwenkachse (40), die zweite Schwenkachse (44) und die dritte Schwenkachse (48) zueinander parallel sind.

6. Vorrichtung nach einem der vorhergehenden Ansprüche, bei der der mittlere Gabelblock (34) des Beschlags (22) ein Buchsengabelblock ist, in dem der mittlere Teil des Schwinghebels (38) aufgenommen ist.
